# EUROPÄISCHE PATENTSCHRIFT

(11) **EP 2 428 435 B1**
(45) Veröffentlichungstag und Bekanntmachung des Hinweises auf die Patenterteilung: **07.11.2012**
(21) Anmeldenummer: 10009566.0
(22) Anmeldetag: 14.09.2010
(51) Int. Cl.: B62D 55/30

(54) **Raupenfahrwerk**
Track assembly
Train de roulement à chenilles

(43) Veröffentlichungstag der Anmeldung: 14.03.2012
(60) Teilanmeldung: 11005834.4
(73) Patentinhaber: Joseph Vögele AG, 67067 Ludwigshafen (DE)
(72) Erfinder: Braun, Arthur, 67146 Deidesheim (DE)
(74) Vertreter: Grünecker, Kinkeldey, Stockmair & Schwanhäusser

(56) Entgegenhaltungen:
- EP-A1- 2 050 664
- WO-A1-01/56867
- DE-U1- 29 616 216
- JP-U- 62 067 882
- US-A- 3 647 270
- US-A1- 2007 029 878

## Beschreibung

Die Erfindung betrifft ein Raupenfahrwerk gemäß Oberbegriff des Patentanspruchs 1.

In Baumaschinen, wie insbesondere Straßenfertigern, umfasst das Fahrwerk zumeist zwei Raupen-Fahrschiffe jeweils mit einem Raupenfahrwerk pro Seite. Das Raupenfahrwerk weist einen stabilen Rahmen auf, in welchem neben Lauf- und Tragrollen und einem Antriebsturas zumindest ein Leitrad und eine Spannvorrichtung für die Raupenkette angeordnet sind. Die Antriebsleistung wird auf den Antriebsturas übertragen, der beispielsweise das untere Trum der Raupenkette zieht und straff hält. Die Spannvorrichtung hält über das Leitrad die Raupenkette in der gewünschten Spannung. Bei Stoßbelastungen oder im Falle eingeklemmter Objekte gibt das Leitrad gegen die Spannvorrichtung nach. Es sind unterschiedliche Spannvorrichtungstypen gebräuchlich. Ein Typ weist eine starke Spiral- oder Schraubenfeder oder ein Ringfederpaket auf, und gegebenenfalls einen Spannzylinder, dessen Kolbenstange durch eine Fettfüllung mittels einer Fettpresse ausgeschoben wird, bis die Raupenkette über das Leitrad leicht durchhängend vorgespannt ist. Ein anderer Typ umfasst ein Zylinder-Kolben-Spannmittel, das mit einer viskosen, kompressiblen Substanz gefüllt ist und die Vorspannung anstelle einer aus Stahl bestehenden Spiral- oder Schraubenfeder erzeugt. Ein weiterer Typ weist als Spannmittel eine Gasdruckfeder mit einem Stickstoffspeicher auf. Das zumindest eine Führungsstück des Leitrades ist ungedämpft in der Linearführung geführt. Die Spannvorrichtungen sind aufwändig und für die erforderlichen Leistung relativ groß dimensioniert. Durch die Relativlagen zwischen kraftübertragenden Achsen der Spannvorrichtung und Übertragungselementen des Leitrades entstehen hohe Kippbelastungen, insbesondere Kippmomente, für das Leitrad. Da solche Baumaschinen, insbesondere Straßenfertiger, sowohl extrem langsame Arbeitsfahrgeschwindigkeiten bei hohem Leistungsbedarf und gegenüber der Arbeitsfahrgeschwindigkeit relativ hohe Transportfahrgeschwindigkeiten fahren, entstehen, insbesondere bei Transportfahrt, relativ laute Laufgeräusche und starker Verschleiß, der hohe Wartungsfrequenzen bedingt.

Das aus EP 2 050 664 A bekannte Raupenfahrwerk enthält im Rahmen die als U-förmiges Maul ausgebildete Leitrad-Linearführung für zwei beiderseits des Rahmens angeordnete Leiträder, deren gemeinsame Achse in dem Führungsstück gelagert ist, das in der Linearführung sitzt und von Führungsplatten in Querrichtung abgestützt wird. Die Spannvorrichtung weist einen oder zwei parallele Spannzylinder auf, die an einem im Rahmen gelagerten Spannhebel angreifen, der auf das Führungsstück einwirkt, und zwar über einen Gleitstein, der bei der Kraftübertragung unterschiedliche Relativbewegungen von Führungsstück und Spannhebel ausgleicht.

Bei dem aus DE 296 06 295 U1 bekannten Raupenfahrwerk ist als Spannelement ein Ringfederpaket vorgesehen, in welchem innen ein hydraulischer Feder-Dämpfer-Einsatz untergebracht sein kann, der mit Fett befüllt wird, bis das Ringfederpaket axial ausreichend vorgespannt ist. Das Leitrad ist mit seiner Achse in wenigstens einem Führungsstück gelagert, das in der Leitrad-Linearführung im Rahmen geführt ist, wobei die Spannvorrichtung direkt an dem Führungsstück angreift und sich im Rahmen abstützt.

Das aus DE 40 25 929 A bekannte Raupenfahrwerk enthält als Spannelement eine Schraubenfeder, die durch eine hydraulische Spannvorrichtung mit einer Fettfüllung vorspannbar ist.

Das aus DE 35 26 437 A bekannte Raupenfahrwerk umfasst in der Spannvorrichtung einen mit Fett füllbaren Spannzylinder und eine mit dem Spannzylinder in Reihe geschaltete Feder- und Dämpfungseinrichtung mit einem mit einer viskosen Substanz gefüllten Arbeitszylinder, dessen Kolben in die viskose Substanz mit einem Umfangsspiel gegenüber der Zylinderinnenwand eintaucht.

Bei dem Aus EP 0 721 879 A bekannten Raupenfahrwerk ist das Leitrad mit einem im Rahmen verschwenkbar gelagerten Spannhebel gekoppelt, der die Kraft der Spannvorrichtung überträgt. Die Seitenführung des Leitrades erfolgt über zwei Führungsstücke. Das im Rahmen abgestützte Spannelement greift am Spannhebel an.

Bei dem aus WO 95/11816 A bekannten Raupenfahrwerk ist die Achse des Leitrades in einem Führungsstück gelagert, das in einem an einem Getriebegehäuse festgelegten Schacht linear geführt wird. Das Führungsstück wird durch einen Spannzylinder beaufschlagt, der sich am Getriebegehäuse abstützt.

Weiterer Stand der Technik ist enthalten in: WO 01/56867 A, US 3 647 270 A, US 2007/029878 A, DE 296 16 216 U und JP 62 067882 U.

Der Erfindung liegt die Aufgabe zugrunde, ein strukturell und belastungsorientiert in Bezug auf die Leitrad-Spannfunktion und/oder Leitrad-Abstützung im Rahmen verbessertes Raupenfahrwerk anzugeben, d.h. die Spannvorrichtung stabil und zentriert zu halten, und die Leitrad-Linearführung von Querkräften aus der Arbeit der Spannvorrichtung zu isolieren.

Die gestellte Aufgabe wird mit den Merkmalen des Patentanspruchs 1 gelöst.

Die weitere Linearführung minimiert unabhängig von dem eingebauten Spannmittel der Spannvorrichtung ungünstige Belastungssituationen für das Leitrad, indem beispielsweise von der Spannvorrichtung keine oder nur für eine ordnungsgemäße Leitrad-Spannfunktion in der Raupenkette ohne weiteres tolerierbare Kippmomente auf das Leitrad aufgebracht werden. Außerdem lässt sich selbst im Fall großbauender Spannmittel, z.B. bei großem Schraubenfederdurchmesser, Bauraum im Raupenfahrwerk einsparen bzw. der gegebene Bauraum dank der beiden getrennten Linearführungen besser nutzen. Die weitere Linearführung hält nämlich die Spannvorrichtung stabil und zentriert und überträgt die Spannkräfte bzw. Reaktionskräfte des Leitrades ohne Kippmomente ausschließlich in der Führungsrichtung. Dies bedeutet, dass die Leitrad-Linearführung von Querkräften aus dem Arbeiten der Spannvorrichtung (beim Spannen der Raupenkette in der einen Richtung, beim Nachgeben des Leitrades gegen die Kraft der Spannvorrichtung in der anderen Richtung) vollständig von quer zur Führungsrichtung orientierten Kraftkomponenten der Spannvorrichtung isoliert ist, da Querkomponenten über das Gleitstück in der weiteren Linearführung aufgenommen werden.

Ferner lässt sich bei Verwendung der weiteren Linearführung noch mehr Bauraum einsparen oder der gegebene Bauraum noch besser nutzen, wenn als Spannmittel wenigstens ein Elastomer-Federkörper vorgesehen ist, der bei kleiner Baugröße extrem leistungsfähig ist, und vor allem eine sehr flache Dämpfungskurve hat, die speziell in Baumaschinen, wie Straßenfertigern, wünschenswert ist, bei denen sowohl im langsamen Arbeitsfahrbetrieb als auch bei schneller Transportfahrt stoßartige Belastungen speziell auf das Leitrad einwirken, die gedämpft werden müssen. Der Elastomer-Federkörper resultiert in einer signifikanten strukturellen und belastungsorientierten Verbesserung des Raupenfahrwerks, weil der Elastomer-Federkörper bei relativ kleiner Baugröße extrem leistungsfähig ist, somit viel Bauraum einsparen lässt, und belastungsorientiert die Leitrad-Spannfunktion und mit einer wünschenswert flachen Dämpfungskurve die Dämpfungsfunktion optimieren lässt. Dies ist besonders zweckmäßig für Baumaschinen, wie Straßenfertiger, die langsame Arbeitsfahrgeschwindigkeiten bei hohem Leistungsbedarf und relativ höhere Transportfahrgeschwindigkeiten fahren müssen, wobei jeweils ein relativ hoher Gleichförmigkeitsgrad gewährleistet sein und das Fahrgeräusch so gering wie möglich ausfallen sollen (Körperschallübertragung). Dies sind nämlich an sich eigentlich konträre Anforderungen für ein Raupenfahrwerk. Der Elastomer-Federkörper bietet jedoch neben der hohen Leistungsdichte den wichtigen Vorteil eines relativ großen Verformungshubes und einer relativ flachen Dämpfungskurve, d.h., einer unabhängig vom Verformungshub relativ gleichförmigen Dämpfung.

Elastomerfedern bzw. Elastomer-Federkörper, beispielsweise aus Natur-Kautschuk oder Synthese-Kautschuk, sind bereits seit Jahren bekannt und werden bisher zur Dämpfung in Karosseriebauteil-Pressen in der Automobilindustrie eingesetzt, siehe beispielsweise die technische Informationsschrift der Firma Effbe GmbH, "ELASTOMER FEDERN von EFFBE" 07/2003, Seiten 1 - 13 (Firma Effbe GmbH, Hanauer Landstraße 16, 63628 Bad Soden-Salmünster, Hessen, http://www.effbe.com)

Zweckmäßig ist in dem Raupenfahrwerk das Gleitstück als Universal-Widerlager für ein zumindest aus folgender Gruppe wahlweise in die Spannvorrichtung einbaubares Spannmittel ausgebildet: Schrauben- oder Spiralfeder-Spannmittel und/oder Zylinder-Kolben-Spannmittel mit einer Füllung einer viskosen, kompressiblen Substanz, und/oder Gasdruckfeder-Spannmittel und/oder Elastomer-Federkörper-Spannmittel und/oder Ringfederpaket-Spannmittel. Diese universelle Ausbildung des Gleitstückes ermöglicht die wahlweise Verwendung des für den jeweiligen Einsatzzweck am besten geeigneten Spannmittels, wobei die weitere Linearführung mit dem Gleitstück unabhängig vom verwendeten Spannmittel konzipiert ist, und gegebenenfalls nur die Abstützung der Spannvorrichtung bzw. des Spannmittels im Rahmen an die Gegebenheiten anzupassen ist.

In einer baulich einfachen Ausführungsform ist das Gleitstück eine viereckige oder runde Platte mit einer Mittelbohrung. Das jeweilige Spannmittel wird z.B. direkt an die Platte angesetzt, wobei eine Vorspann- und/oder Führungsausstattung des Spannmittels in die Mittelbohrung der Platte einbringbar ist, sich relativ zur Platte in der Führungsrichtung zu bewegen vermag und das Spannmittel zentriert wird.

Eine sehr stabile und leichtgängige Führung des Gleitstückes in der weiteren Linearführung ist möglich, wenn das Gleitstück als Basis einer Portalstruktur mit zwei an Portalaußenwänden außenliegenden Führungsleisten ausgebildet ist. An einem Portalquerjoch, das die Portalaußenwände stabilisierend verbindet, ist ein sich zum Führungsstück des Leitrades erstreckendes Druckelement angebracht. Die Führungsleisten übernehmen die Führungsaufgabe für das Gleitstück in der weiteren Linearführung und sind, zweckmäßig, austauschbar angebracht. Die Portalstruktur schafft ferner Freiraum für sich beim Arbeiten des Spannelementes durch das Gleitstück bewegende Ausstattungskomponenten.

Bei einer zweckmäßigen Ausführungsform ist wenigstens ein Leitrad zwischen zwei die Leitradachse aufnehmenden, parallelen Führungsstücken angeordnet. Gegebenenfalls wird sogar ein Leitradpaar für die Raupenkette vorgesehen und an den beiden Führungsstücken gelagert. Die Führungsstücke können über einen Verbindungskörper verbunden sein und einen stabilen, beispielsweise U-förmigen Führungsstrukturbauteil bilden. Der Verbindungskörper kann einen Anschluss für das Druckelement aufweisen oder sogar fest mit dem Druckelement verbunden werden. Das Druckelement überträgt einerseits die Spannkraft des Spannmittels auf das Leitrad, und andererseits Ausweichbewegungen des Leitrades auf das Spannmittel. Die beiden Führungsstücke erzeugen eine sehr stabile Abstützung des Leitrades im Rahmen des Raupenfahrwerks. Alternativ könnte auch ein einziges Führungsstück für ein Leitrad oder für zwei beiderseits des Führungsstückes angeordnete Leiträder vorgesehen und mit dem Druckelement gekoppelt werden.

Um eine saubere und leichtgängige Führung des Leitrades in der Leitrad-Linearführung zu gewährleisten, ist es zweckmäßig, am Führungsstück zumindest ober- und unterseitig Gleitbeläge dort anzuordnen, wo Kontakt zwischen Führungsflächen auftritt. Die Gleitbeläge können beispielsweise aus verschleißfestem, gut gleitendem Hardox-Werkstoff hergestellt sein und werden zweckmäßig auswechselbar festgelegt. Um, vor allem im Hinblick auf geringe Laufgeräusche, und auch zur Dämpfung des Leitrades eine strukturelle Verbesserung zu erzielen, ist zweckmäßig zwischen dem Führungsstück und jedem Gleitbelag eine Dämpfungsschicht vorgesehen. Diese Dämpfungsschicht kann die Form wenigstens eines Kunststoffstreifens haben, der entweder eingelegt oder mit dem Führungsstück und/oder dem Gleitbelag verbunden wird. Die Kombination der Gleitbeläge mit den Dämpfungsschichten ist ein erfindungswesentliches Merkmal und kann unabhängig davon vorgesehen werden, ob eine weitere Linearführung vorgesehen ist, oder nicht, und ob als Spannmittel herkömmliche Spannmittel oder wenigstens ein Elastomer-Federkörper vorgesehen ist.

Zweckmäßig sind der Gleitbelag und die Dampfungsschicht mittels wenigstens eines Feder-Pass-Elements am Führungsstück befestigt, das sich in etwa senkrecht zur Führungsrichtung in das Führungsstück erstreckt. Solche Feder-Pass-Elemente sind bekannt beispielsweise von www.connexch.com "Connex® Feder-Pass-Elemente".

Als Elastomer-Werkstoff für den Elastomer-Federkörper ist Natur- und/oder Synthese-Kautschuk zweckmäßig. Vorzugsweise handelt es sich dabei um einen Chloropren-Kautschuk oder einen Polyurethan-Kautschuk mit einer Shore-A-Härte > 60 Shore, vorzugsweise sogar > 70 Shore, vorzugsweise bis zu einer Shore-A-Härte von etwa 90 Shore oder mehr.

Bei einer zweckmäßigen Ausführungsform ist der Elastomer-Federkörper annähernd zylindrisch mit ebenen Endflächen zur Kraftübertragung und einer Mittellängsbohrung für einen Führungsbolzen ausgebildet. Der Elastomer-Federkörper wird axial und vor allem so installiert oder eingebaut, dass er beim Arbeiten der Spannvorrichtung zum Ausbauchen genügend Freiraum nach außen hat.

Zweckmäßig sind mehrere Elastomer-Federkörper in Reihe und/oder parallel geschaltet, wobei eine Reihenschaltung den Vorteil eines relativ großen Verformungshubs bietet. Dann sollten zwischen den in Reihe geschalteten Elastomer-Federkörpern Federteller zwischengelegt, und ein durchgehender Führungsbolzen zur mechanischen Führung und Zentrierung vorgesehen werden. Der Elastomer-Federkörper kann freiliegend installiert sein, oder mit das Ausbauchen zulassendem Radialspiel eingekapselt sein. Die kreiszylindrische Form des Elastomerkörpers ist eine zweckmäßige Option, es könnten auch andere Querschnittsformen gewählt werden. Im Regelfall ist die axiale Länge des Elastomer-Federkörpers größer als dessen Außendurchmesser. Elastomer-Federkörper sind in unterschiedlichen Spezifikationen zu relativ günstigen Kosten im Handel erhältlich, sind dauerelastisch und bruchsicher und innerhalb eines weiten Temperaturbereiches einsetzbar. Es kann jedoch erforderlich sein, den Elastomer-Federkörper vor dem Arbeitseinsatz mehrfach, z.B. zehnmal, zusammenzudrücken, um ihn setzen zu lassen. Der Temperatureinsatzbereich liegt beispielsweise zwischen -20°C bis +80°C, und kann sich kurzzeitig sogar von -40°C bis zu 120°C erstrecken. Er ist beständig gegen Öl und Schmieröl, Fett, Alkohol, Waschbenzin, Wasser, Ozon, Laugen und Säuren. Zur Gewährleistung eines kraftschlüssigen Federeinsatzes ist auch wegen der Setzneigung eine Vorspannung zweckmäßig, die größer sein sollte als die Setzneigung. Der mögliche Federweg kann zwischen etwa 30 % und 40 % der axialen Länge betragen, wobei die Setzneigung ausgehend von der Ursprungslänge zwischen etwa 3 % bis etwa 8 % betragen kann.

Anhand der Zeichnungen werden Ausführungsformen des Erfindungsgegenstandes erläutert. Es zeigen:
- Fig. 1: eine perspektivische Schemadarstellung eines Raupenfahrwerks mit einem Leitrad, wobei für die Erfindung nebensächliche bauliche Merkmale, wie Lauf- und Tragrollen oder ein Antriebsturas und auch eine Raupenkette der Übersichtlichkeit halber weggelassen sind, und
- Fig. 2: eine Perspektivdarstellung eines in Fig. 1 nur schematisch angedeuteten Spannelements, das wenigstens einen Elastomer-Federkörper aufweist.

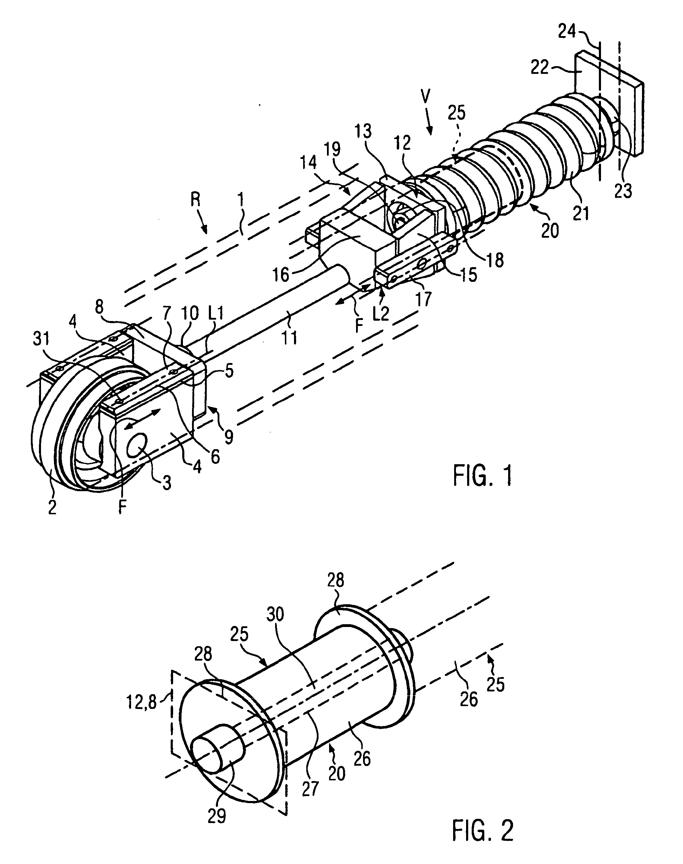

Fig. 1 verdeutlicht ein Raupenfahrwerk R, insbesondere für eine Baumaschine wie einen Straßenfertiger (nicht gezeigt), wobei das Raupenfahrwerk R einen Rahmen 1 (beispielsweise eine hochkantverbaute Stahlplatte) aufweist, an der neben nicht gezeigten Trag- und Laufrollen für eine nicht gezeigte Raupenkette auch ein Antriebsturas oder Antriebskettenrad (nicht gezeigt) angeordnet sein kann, wobei die Raupenkette über ein Leitrad 2 geführt ist, das eine Raupenketten-Spannfunktion in dem Raupenfahrwerk R erbringt und durch eine Spannvorrichtung V die Raupenkette vorspannt, jedoch gegen die Kraft der Spannvorrichtung V unter Stoßbelastungen nachgibt. Alternativ könnten auch zwei oder mehr nebeneinanderliegende Leiträder 2 vorgesehen sein (nicht gezeigt).

Das Leitrad 2 ist mit einer Leitradachse 3 in einer Leitrad-Linearführung L1 des Rahmens 1 in einer Führungsrichtung F beweglich geführt, und zwar über hier zwei parallele, blockartige Führungsstücke 4. Jedes Führungsstück 4 trägt zumindest ober- und unterseitig je einen Gleitbelag 6, beispielsweise in Form einer Leiste aus einem verschleißfesten, gleitfreudigen Hardox-Werkstoff. Der Gleitbelag 5 ist zweckmäßig austauschbar (Befestigungselemente 7) am Führungsstück 4 angebracht. Zwischen jedem Gleitbelag 6 und dem Führungsstück 4 ist eine Dämpfungsschicht 5 vorgesehen, beispielsweise ein Kunststoffstreifen, der entweder lose eingelegt oder mit dem Gleitbelag 6 und/oder dem Führungsstück 4 verbunden ist, z.B. stoffschlüssig verbunden ist. Die beiden Führungsstücke 4 sind in den gezeigten Ausführungsformen über einen Verbindungskörper 8 in Form einer viereckigen stabilen Platte zu einem U-förmigen Führungsstrukturbauteil 9 vereinigt, zwischen dessen Schenkeln das Leitrad 2 oben, unten und an einer Frontseite vorstehend untergebracht ist. Die Leitrad-Linearführung L1 kann im Rahmen 1 maulförmig oder schachtförmig geformt oder eingebaut sein (nicht im Detail gezeigt), und greift am Führungsstück 4 zumindest über die Gleitbeläge 5 an.

Das Befestigungselement 7 ist zweckmäßig ein Feder-Pass-Element 31, das in etwa senkrecht zur Führungsrichtung F in Bohrungen eingepasst ist und sich bis in das Führungsstück 4 erstreckt. Solche Feder-Pass-Elemente 31 sind beispielsweise wellenzahnförmig längs geschlitzte Federstahlhülsen aus hochwertigem Chrom-Vanadium-Stahl, sind montagefreundlich und garantieren beim Fügen mehrerer Bauteile festen Sitz über lange Standzeiten.

Am Verbindungskörper 8 ist ein Anschluss 10, beispielsweise ein Rohransatz, zur Kopplung des Führungsstrukturbauteiles 9 mit einem Druckelement 11 vorgesehen, das bei der gezeigten Ausführungsform ein Rundrohr oder massives Rundprofil ist und sich im Wesentlichen parallel zur Führungsrichtung F zu einer weiteren Linearführung L2 des Raupenfahrwerks R und somit zur Spannvorrichtung V erstreckt. In der weiteren Linearführung L2, die dieselbe Führungsrichtung F hat, wie die Leitrad-Linearführung L1, ist ein Gleitstück 12 verschiebbar geführt, das beispielsweise als quadratische oder runde Platte 13 mit einer Innenbohrung 18 und als Universal-widerlager für ein Spannmittel 20 von unterschiedlichen Spannmitteln der Spannvorrichtung V dient. Das Gleitstück 12 ist z.B. in einer Portalstruktur 14 an Portalseitenwänden 15 abgestützt, die über ein Portalquerjoch 16 miteinander verbunden sind, an welchem das Druckelement 11 angreift oder fest montiert ist. Zwischen dem Portalseitenwänden 15 und dem Portalquerjoch 16 ist ein Freiraum gebildet, beispielsweise für eine Ausstattung 19 der Spannvorrichtung V, die beim Zusammendrücken der Spannvorrichtung V in der Führungsrichtung F in die Portalstruktur 14 eintaucht. Außen an den Portalseitenwänden 15 (alternativ am Gleitstück 12) sind Führungsleisten 17 angebracht, die in der weiteren Linearführung L2 geführt sind.

Das Spannmittel 20 ist in Fig. 1 z.B. eine Schrauben- oder Spiralfeder 21 aus Federstahl, die am Gleitstück 12 angreift und sich an einer Platte 22 eines im Rahmen 1 vorgesehenen Widerlagers 24 abstützt. Gegebenenfalls enthält die Spannvorrichtung V eine Ausstattungskomponente 23 zum Vorspannen der nicht gezeigten Raupenkette auf dem Leitrad 2, und zwar in der Führungsrichtung F und nach links. Das Spannmittel 20 ist zwischen dem Gleitstück 12 und der Platte 22 mit axialer Vorspannung montiert.

Anstelle der Spiral- oder Schraubenfeder 21 aus Stahl kann die Spannvorrichtung als Spannmutter 20 andere Spannmitteltypen aufweisen, wie beispielsweise eine Gasfeder mit einem Stickstoffdruckspeicher, ein Zylinder-Kolben-Spannmittel mit einer Füllung einer viskosen, kompressiblen Substanz, oder ein Ringfederpaket, oder schließlich zumindest einen Elastomer-Federkörper 25 (gestrichelt angedeutet).

Die weitere Linearführung L2, die in Fig. 1 nur schematisch angedeutet ist, kann im Rahmen 1 geformte oder dort montierte Führungsbahnen für die an den Portalaußenwänden 15, gegebenenfalls dem Portalquerjoch 16 und/oder Gleitstück 12 angebrachten Führungsleisten 17 aufweisen. Die Linearführungen L1, L2 sind, zweckmäßig, baulich voneinander separiert und in Führungsrichtung F voneinander beabstandet, wobei die Führungsrichtungen F die gleichen oder parallel sind. Die weitere Linearführung L2 nimmt Querkräfte auf, die von der Spannvorrichtung V stammen, und stellt sicher, dass das Druckelement 11 nur Druckkräfte in der Führungsrichtung F auf jedes Führungsstück 4 überträgt (ohne Kippmomente), bzw. dass beim Nachgeben des Leitrades 2 in Fig. 1 nach rechts in Führungsrichtung F keine Querkräfte oder Kippmomente entstehen, da dann auch die Leitrad-Linearführung L1 solche Querkräfte aufnimmt und in den Rahmen 1 überträgt. Die Dämpfungsschicht 5 vermindert das Laufgeräusch des Raupenfahrwerks R, speziell bei höheren Fahrgeschwindigkeiten.

Bei Verwendung wenigstens eines unter axialer Zusammendrückung ausbauchbar eingebauten Elastomer-Federkörpers 25 (in Fig. 1 gestrichelt angedeutet) als Spannmittel 20 der Spannvorrichtung V lässt sich erheblich Bauraum einsparen, beispielsweise im Vergleich zu einem Spiral- oder Schraubenfeder-Spannmittel. Ferner lässt sich durch die beiden strukturell separierten Linear-Führungen L1, L2 der im Raupenfahrwerk R verfügbare Bauraum besser ausnutzen, gegenüber einem Konzept, bei welchem die Spannvorrichtung V direkt an dem Leitrad 2 bzw. dem Führungsstrukturbauteil 9 angreift, obwohl auch eine solche Lösung zweckmäßig sein kann, beispielsweise falls als Spannmittel 20 der wenigstens eine Elastomer-Federkörper 25 verwendet wird, der sich bei relativ kleiner Baugröße durch hohe Leistungsfähigkeit und beträchtlichem Verformungsweg auszeichnet und eine wünschenswert flache Dämpfungskurve zeigt.

Der Elastomer-Federkörper 25 als Spannmittel 20 ist in Fig. 2 gezeigt. Der Elastomer-Federkörper 25 ist beispielsweise kreiszylindrisch mit ebenen Endflächen, an denen Federteller 28, beispielsweise aus Stahl, anliegen können, deren Größe größer sein kann als die radiale Verformung des Elastomer-Federkörpers bei axialer Zusammendrückung. Eine Mittelbohrung 27 dient zur Aufnahme eines gegebenenfalls vorgesehenen Führungsbolzens 30, der eine mechanische Führung und Zentrierung des Elastomer-Federkörpers 25 bei axialer Zusammendrückung sicherstellt und sich durch die Federteller 28 bis in einen Vorsprung 29 erstreckt, der beispielsweise in Fig. 1 in die Mittelbohrung 18 des Gleitstückes 12, oder bei direktem Anschluss des Elastomer-Federkörpers 25 an den Führungsstrukturbauteil 9 (nicht gezeigt) in die Fassung 10 des Verbindungskörpers 8 eingreift, oder in eine Bohrung im Verbindungskörper 8.

Ferner verdeutlicht Fig. 2, dass mehrere Elastomer-Federkörper 25 in Reihe geschaltet sein können, vorzugsweise jeweils über zwischengelegte Federteller 28 und einen dann durchgehenden Führungsbolzen 30. Alternativ könnten mehrere Elastomer-Federkörper 25 nebeneinander parallel geschaltet sein (nicht gezeigt). Auch eine Parallel- und Reihenschaltung ist möglich, abhängig von den Leistungsanforderungen für die Spannvorrichtung V.

Der Elastomer-Federkörper 25 besteht z.B. aus Natur-Kautschuk oder Synthese-Kautschuk 26, d.h., einem Elastomer-Werkstoff, der als Feder inkompressibel, jedoch bei axialer Zusammendrückung ausbauchbar ist, und so eingebaut ist, dass für ihn in eingebautem Zustand entsprechende Freiräume zum Ausbauchen vorgesehen sind. Falls nur ein Elastomer-Federkörper 25 als Spannmittel 20 vorgesehen ist, kann ein Führungsbolzen 30 gegebenenfalls weggelassen werden, wie auch die Federteller 28. Die Endflächen des Federkörpers 25 können eben sein, wobei die Auflageflächen beispielsweise am Verbindungskörper 8 oder am Gleitstück 12 glatt sein sollten, dabei plan, erhaben oder freigesenkt ausgebildet sein können. Die Führung und Zentrierung des Elastomer-Federkörpers 25 wird idealerweise mit einem Führungsbolzen 30 erreicht, um ein Ausknicken zu vermeiden. In Reihenschaltung addieren sich bei gleichen Federkräften die Einzelfederwege. Hierbei sollten die Elastomer-Federkörper 25 geführt werden, z.B. durch den durchgehenden Führungsbolzen 30.

Der Elastomer-Federkörper 25 in den Fig. 1 und 2 hat mit der Mittelbohrung 27 zylindrische Gestalt, wobei im Regelfall die axiale Länge größer ist als der Außendurchmesser. Der Natur-Kautschuk kann ein Chloropren-Kautschuk sein, während der Synthese-Kautschuk ein Polyurethan-Kautschuk sein kann, wobei Shore-A-Härten > 60, zweckmäßig sogar > 70 und bis 90 Shore oder mehr zweckmäßig sind.

## Patentansprüche

1. Raupenfahrwerk (R), insbesondere für eine Baumaschine wie einen Straßenfertiger, mit einem eine Leitrad-Linearführung (L1) aufweisenden Rahmen (1), in welchem wenigstens ein die Leitradachse (3) lagerndes Führungsstück (4) verschiebbar ist, das in der linearen Führungsrichtung (F) durch ein Spannmittel (20) einer im Rahmen (1) abgestützten Spannvorrichtung (V) beaufschlagbar ist, **dadurch gekennzeichnet, dass** im Rahmen (1) zwischen dem Führungsstück (4) in der Leitrad-Linearführung (L1) und dem Spannmittel (20) der Spannvorrichtung (V) eine weitere Linearführung (L2) für ein in derselben Führungsrichtung (F) verschiebbares, mit dem Führungsstück (4) gekoppeltes Gleitstück (12) vorgesehen ist, an dem das Spannmittel (20) der Spannvorrichtung (V) angreift.

2. Raupenfahrwerk nach Anspruch 1, **dadurch gekennzeichnet, dass** als Spannmittel (20) der Spannvorrichtung(V) wenigstens ein unter axialer Zusammendrückung rückstellend ausbauchbar eingebauter Elastomerfeder-Körper (25) aus einem als Feder weitestgehend inkompressiblen Elastomer-Werkstoff vorgesehen ist.

3. Raupenfahrwerk nach Anspruch 1, **dadurch gekennzeichnet, dass** das Gleitstück (12) als Universal-Widerlager für zumindest ein aus folgender Gruppe wahlweise in die Spannvorrichtung (V) einbaubares Spannmittel (20) ausgebildet ist: Schraubenfeder- oder Ringfeder-Paket-Spannmittel (21) oder Zylinder-Kolben-Spannmittel mit einer Füllung einer viskosen, kompressiblen Substanz, oder Gasdruckfeder-Spannmittel, oder als wenigstens ein mechanisch geführter und zentrierter, unter axialer Zusammendrückung rückstellend ausbauchbar eingebauter Elastomer-Federkörper (25) aus einem als Feder weitestgehend inkompressiblen Elastomer-Werkstoff.

4. Raupenfahrwerk nach Anspruch 1, **dadurch gekennzeichnet, dass** das Gleitstück (12) als viereckige oder runde Platte (13) mit einer Mittelbohrung (18) ausgebildet ist.

5. Raupenfahrwerk nach Anspruch 1, **dadurch gekennzeichnet, dass** das Gleitstück (12) als Basis in einer Portalstruktur (14) mit zwei an Portalaußenwänden (15) außenliegenden, vorzugsweise austauschbar angebrachten, Führungsleisten (17) und einem mit dem Portalquerjoch (16) verbundenen, langgestreckten Druckelement (11) angeordnet ist.

6. Raupenfahrwerk nach wenigstens einem der Ansprüche 1 bis 5, **dadurch gekennzeichnet, dass** wenigstens ein Leitrad (2) zwischen zwei die Leitradachse (3) aufnehmenden, parallelen Führungsstücken (4) angeordnet ist, die in einem U-förmigen Führungsstrukturbauteil (9) über einen Verbindungskörper (8) verbunden sind, wobei, vorzugsweise, am Verbindungskörper (8) ein Anschluss (10) für ein langgestrecktes Druckelement (11) vorgesehen ist, das sich zu dem vom Spannmittel (20) beaufschlagten Gleitstück (12) erstreckt.

7. Raupenfahrwerk nach Anspruch 1 oder 2, **dadurch gekennzeichnet, dass** am jeweiligen Führungsstück (4) ober- und unterseitig Gleitbeläge (6), vorzugsweise aus verschleißfestem Hardox-Werkstoff, angeordnet sind, und dass zwischen dem Führungsstück (4) und jedem Gleitbelag (6) eine Dämpfungsschicht (5) angeordnet ist, vorzugsweise in Form wenigstens eines Kunststoffstreifens.

8. Raupenfahrwerk nach Anspruch 7, **dadurch gekennzeichnet, dass** der Gleitbelag (6), und, vorzugsweise, gemeinsam mit diesem die Dämpfungsschicht (5), mittels wenigstens einer senkrecht zur Führungsrichtung (F) bis in das Führungsstück (4) eingreifenden Feder-Pass-Elements (31) festgelegt sind, vorzugsweise mittels einer wellenzahnförmig, längs geschlitzten Federstahl-Passhülse.

9. Raupenfahrwerk nach Anspruch 2, **dadurch gekennzeichnet, dass** der Elastomer-Werkstoff (26) des Elastomer-Federkörpers (25) Natur- oder/und Synthese-Kautschuk ist, vorzugsweise Chloropren-Kautschuk oder Polyurethan-Kautschuk mit Shore-A-Härten > 60 Shore, vorzugsweise sogar > 70 Shore bis etwa 90 Shore.

10. Raupenfahrwerk nach Anspruch 2, **dadurch gekennzeichnet, dass** der Elastomer-Federkörper (25) zylindrisch mit ebenen Endflächen, und vorzugsweise mit einer Mittellängsbohrung (27) für einen Führungsbolzen (30), ausgebildet ist.

11. Raupenfahrwerk nach Anspruch 2, **dadurch gekennzeichnet, dass** mehrere Elastomer-Federkörper (25) in Reihe und/oder parallel geschaltet sind, vorzugsweise in Reihenschaltung mit zwischengelegten Federtellern (28) und einem durchgehenden Führungsbolzen (30).

## Claims

1. Track assembly (R), in particular for a construction machine, such as a road paver, with a frame (1) comprising an idler wheel linear guide (L1), in which at least one guide piece (4) holding the idler wheel axle (3) is slidably accommodated, is actuated by a tensioning means (20) of a tensioning device (V) supported in the frame (1), **characterised in that** a further linear guide (L2) for a slider (12) is provided in the frame (1) between the guide piece (4) accommodated in the idler wheel linear guide (L1) and the tensioning means (20) of the tensioning device (V), the slider (12) being coupled with the guide piece (4) and being slidable in the same linear guiding direction (F), and that the tensioning means (20) of the tensioning device (V) engages at the slider (12).

2. Track assembly (R) according to claim 1, **characterised in that** at least one elastomer spring body (25) is provided as the tensioning means (20) of the tensioning device (V), the spring body being mounted to resettably bulge upon axial compression and being formed of an elastomer material largely incompressible as a spring.

3. Track assembly according to claim 1, **characterised in that** that the slider (12) is embodied as a universal counterfort for a tensioning means (20) to be mounted in the tensioning device (V) which is optionally selected from at least the following group: coil spring or annular spring package tensioning means (21), or cylinder-piston tensioning means with a filling of a viscous, compressible substance, or gas pressure spring tensioning means, or at least one mechanically guided and centred elastomer spring body (25) of an elastomer material largely incompressible as a spring, mounted to resettably bulge under axial compression.

4. Track assembly according to claim 1, **characterised in that** the slider (12) is embodied as a rectangular or round plate (13) having a central bore (18).

5. Track assembly according to claim 1, **characterised in that** the slider (12) is arranged as a base of a portal structure (14) with two guide strips (17) situated externally at outer portal walls (15), preferably attached to be replaceable, and that a longitudinally extending pressure element (11) is connected to a lateral portal yoke (16).

6. Track assembly according to at least one of the claims 1 to 5, **characterised in that** at least one idler wheel (2) is arranged between two parallel guide pieces (4) accommodating the idler wheel axle (3), which guide pieces (4) are connected via a connecting body (8) within a U-shaped guiding structure component (9) wherein, preferably, at the connecting body (8) a connection (10) is provided for the longitudinally extending pressure element (11) which extends to the slider (12) on which the tensioning means (20) acts.

7. Track assembly according to claim 1 or 2, **characterised in that** sliding linings (6) are arranged at upper and lower sides of the respective guide piece (4), preferably made of wear resistant Hardox material, and that a damping layer (5) is arranged between the guide piece (4) and each sliding lining (6), preferably in the form of at least one plastic strip.

8. Track assembly according to claim 7, **characterised in that** the sliding lining (6) and, preferably commonly with the sliding lining (6) also the damping layer (5), are fixed by means of at least one fitting key element (31) engaging into the guide piece (4) perpendicularly to the guiding direction (F), preferably by means of a spring steel fitting sleeve having a longitudinal wave-shaped slot.

9. Track assembly according to claim 2, **characterised in that** the elastomer material (26) of the elastomer spring body (25) is natural and/or synthetic rubber, preferably chloroprene rubber or polyurethane rubber, having a Shore A hardness of > 60 Shore, preferably even > 70 Short to about 90 Shore.

10. Track assembly according to claim 2, **characterised in that** the elastomer spring body (25) is formed cylindrically with flat end surfaces, and preferably with a longitudinal central bore (27) for a guide pin (30).

11. Track assembly according to claim 2 **characterised in that** several elastomer spring bodies (25) are connected in series and/or parallel, preferably in a series connection with intermediate spring plates (28) and a guide pin (30) passing through the elastomer spring bodies (25).

## Revendications

1. Train de roulement à chenilles (R), en particulier pour un engin de chantier tel qu'un finisseur, avec un châssis (1) comportant un guidage linéaire à roue directrice (L1), dans lequel peut se déplacer au moins une pièce de guidage (4) dans laquelle est logé l'essieu directeur (3), qui peut être chargée dans la direction de guidage linéaire (F) par un moyen de mise sous tension (20) d'un dispositif de mise sous tension (V) s'appuyant sur le châssis (1), **caractérisé en ce qu'**un autre guidage linéaire (L2) pour une pièce coulissante (12) pouvant se déplacer dans la même direction de guidage (F) et accouplé avec la pièce de guidage (4) est pourvu dans le châssis (1) entre la pièce de guidage (4) dans le guidage linéaire à roue directrice (L1) et le moyen de mise sous tension (20) du dispositif de mise sous tension (V), avec lequel s'engage le moyen de mise sous tension (20) du dispositif de mise sous tension (V).

2. Train de roulement à chenilles selon la revendication 1, **caractérisé en ce que** le moyen de mise sous tension (20) du dispositif de mise sous tension (V) est pourvu d'au moins un corps élastique en élastomère (25) intégré pouvant se déployer en rappel sous compression axiale en un matériau élastomère essentiellement incompressible comme ressort.

3. Train de roulement à chenilles selon la revendication 1, **caractérisé en ce que** la pièce coulissante (12) est constituée comme une butée universelle pour au moins un moyen de mise sous tension (20) intégrable dans le dispositif de mise sous tension (V), choisi librement parmi le groupe constitué par : un moyen de mise sous tension (21) à ressort hélicoïdal ou à pile de ressorts annulaires, un moyen de mise sous tension à piston et cylindre rempli d'une substance visqueuse et compressible, un moyen de mise sous tension à ressort à gaz, et au moins un corps élastique en élastomère (25) intégré, guidé mécaniquement et centré, pouvant se déployer en rappel sous compression axiale, en un matériau élastomère essentiellement incompressible comme ressort.

4. Train de roulement à chenilles selon la revendication 1, **caractérisé en ce que** la pièce coulissante (12) est constituée comme une plaque rectangulaire ou ronde (13) avec un perçage central (18).

5. Train de roulement à chenilles selon la revendication 1, **caractérisé en ce que** la pièce coulissante (12) est agencée comme la base d'une structure de portique (14) à deux barres de guidage (17) agencées à l'extérieur de parois externes de portique (15), préférablement de manière interchangeable, et à élément de compression allongé (11) relié à la traverse du portique (16).

6. Train de roulement à chenilles selon au moins l'une des revendications 1 à 5, **caractérisé en ce qu'**au moins une roue directrice (2) est agencée entre deux pièces de guidage parallèles (4) dans lesquelles est logé l'essieu directeur (3), qui sont connectées par un corps de connexion (8) dans un élément de structure de guidage en forme de U (9), dans lequel une connexion (10) pour un élément de compression allongé (11) est préférablement pourvue sur le corps de connexion (8), qui s'étend vers la pièce coulissante (12) soumise au moyen de mise sous tension (20).

7. Train de roulement à chenilles selon la revendication 1 ou 2, **caractérisé en ce que** des revêtements de glissement supérieur et inférieur (6), préférablement en matériau Hardox résistant à l'usure, sont appliqués sur ladite pièce de guidage (4), et **en ce qu'**une couche d'amortissement (5) est agencée entre la pièce de guidage (4) et chaque revêtement de glissement (6), préférablement sous forme d'au moins une bande en plastique.

8. Train de roulement à chenilles selon la revendication 7, **caractérisé en ce que** le revêtement de glissement (6), et préférablement conjointement à celui-ci la couche d'amortissement (5), sont fixés à l'aide d'au moins un élément d'ajustement à ressort (31) s'engageant jusque dans la pièce de guidage (4) perpendiculairement à la direction de guidage (F), préférablement à l'aide d'un manchon d'ajustement en acier à ressort fendu en longueur de forme dentée et ondulée.

9. Train de roulement à chenilles selon la revendication 2, **caractérisé en ce que** le matériau élastomère (26) du corps élastique en élastomère (25) est un caoutchouc naturel ou de synthèse, préférablement un caoutchouc chloroprène ou un caoutchouc polyuréthane à dureté Shore A > 60 Shore, et préférablement encore > 70 Shore jusqu'à environ 90 Shore.

10. Train de roulement à chenilles selon la revendication 2, **caractérisé en ce que** le corps élastique en élastomère (25) est constitué sous une forme cylindrique à bases planes, et préférablement avec un perçage longitudinal central (27) pour un axe de guidage (30).

11. Train de roulement à chenilles selon la revendication 2, **caractérisé en ce que** plusieurs corps élastiques en élastomère (25) sont assemblés en série et/ou en parallèle, préférablement en assemblage en série avec des coupelles de ressort intercalées (28) et traversé par un axe de guidage (30).
